# EUROPEAN PATENT APPLICATION

(11) **EP 4 137 961 A1**
(43) Date of publication of application: **22.02.2023**
(21) Application number: 21787710.9
(22) Date of filing: 24.03.2021
(51) Int. Cl.: G06F 16/22, G06F 16/25, G06N 20/00, G06K 9/62

(54) **METHOD AND APPARATUS FOR EXECUTING AUTOMATIC MACHINE LEARNING PROCESS, AND DEVICE**

(30) Priority: 17.04.2020 CN 202010307807
(71) Applicant: The Fourth Paradigm (Beijing) Tech Co Ltd, Beijing 100085 (CN)
(72) Inventor: LV, Zihui, Beijing 100085 (CN); WANG, Yusen, Beijing 100085 (CN); YUE, Ling, Beijing 100085 (CN); GUO, Xiawei, Beijing 100085 (CN); GUO, Zhen, Beijing 100085 (CN); ZHANG, Yu, Beijing 100085 (CN); GU, Yuchen, Beijing 100085 (CN)
(74) Representative: Hübner, Gerd
(86) International application number: PCT/CN2021/082518
(87) International publication number: WO 2021/208685

(57) **Abstract**

The present disclosure provides a method, device and apparatus for execution of an automated machine learning process. The method includes: providing a model training operator and a model prediction operator that are mutually independent; training a machine learning model on the basis of training data using the model training operator; and providing a prediction service on prediction data using the model prediction operator and the trained machine learning model.

## Description

The present disclosure claims priority to Chinese Patent Application No. 202010307807.5 submitted with the CNIPA on April 17, 2020, entitled "METHOD, DEVICE AND APPARATUS FOR EXECUTION OF AUTOMATED MACHINE LEARNING PROCESS", which is hereby incorporated by reference in its entirety.

### TECHNICAL FIELD

The present disclosure relates to the technical field of artificial intelligence, and more specifically to a method for execution of an automated machine learning process, a device for execution of an automated machine learning process, an apparatus including at least one computing device and at least one storage device, and a computer-readable storage medium.

### BACKGROUND

With the rapid development and application of machine learning technologies, automated machine learning technologies have greatly lowered the access threshold of machine learning and saved manpower cost thereof. However, existing tools for automated machine learning are too simple and one-sided in their functions to cover the whole process of machine learning model construction and application. In particular, existing tools for automated machine learning can only accomplish training of a machine learning model on the basis of amassed historical data, and are incapable of effectively realizing subsequent production and application of machine learning models (e.g., incapable of providing online services using machine learning models). In other words, there is a severe mismatch in existing technologies between scheme or results of modeling and the application process of a model. Moreover, existing technologies lacks a friendly way of interaction and thus are only accessible to users with a certain level of programming skills, i.e., the access threshold thereof is not actually lowered.

### SUMMARY

An object of embodiments of the present disclosure is to provide a novel technical solution for execution of an automated machine learning process.

According to a first aspect of the disclosure, there is provided a method for execution of an automated machine learning process, the method including: providing a model training operator and a model prediction operator that are mutually independent; training a machine learning model on the basis of training data using the model training operator; and providing a prediction service on prediction data using the model prediction operator and the trained machine learning model.

According to a second aspect of the disclosure, there is also provided a device for execution of an automated machine learning process, the device including: an interaction module, configured to provide a model training operator and a model prediction operator that are mutually independent; a machine learning model training module, configured to train a machine learning model on the basis of stored training data using the model training operator; and a data prediction module, configured to provide a prediction service on collected prediction data using the model prediction operator and the trained machine learning model.

According to a third aspect of the present disclosure, there is also provided an apparatus including at least one computing device and at least one storage device, wherein the at least one storage device is configured to store instructions, the instructions being configured to cause the at least one computing device to execute in operation the method of the first aspect.

According to a fourth aspect of the present disclosure, there is also provided a computer-readable storage medium having a computer program stored thereon, which computer program, when executed by a processor, implements the method of the first aspect.

The method according to an embodiment of the present disclosure provides a model training operator and a model prediction operator that are mutually independent, accomplishes training of a machine learning model using a model training operator, and provides a prediction service using a model prediction operator, thereby enabling full process cyclic operation in a plurality of processes such as model production and model application, and thus greatly reducing access threshold and cost of machine learning.

### BRIEF DESCRIPTION OF THE DRAWINGS

The accompanying drawings, which are incorporated in the description and constitute a part of the description, illustrate embodiments of the present disclosure and, together with the description thereof, serve to explain the principles of the present disclosure.
Fig. 1 is a block diagram showing an example of a hardware configuration of an electronic apparatus that may be used to implement an embodiment of the present disclosure;
Fig. 2 shows a flow chart of a method for execution of an automated machine learning process according to an embodiment of the present disclosure;
Figures 3 to 7 show schematic illustrations of an interface display for execution of an automated machine learning process according to an embodiment of the present disclosure;
Fig. 8 shows a schematic block diagram of a device for execution of an automated machine learning process according to an embodiment of the present disclosure;
Fig. 9 shows a schematic block diagram of an apparatus according to an embodiment of the present disclosure.

### DETAILED DESCRIPTION

Various exemplary embodiments of the present disclosure will now be described in detail with reference to the accompanying drawings. It is to be noted that unless otherwise specified, the scope of present disclosure is not limited to relative arrangements, numerical expressions and values of components and steps as illustrated in the embodiments.

Description to at least one exemplary embodiment is for illustrative purpose only, and in no way implies any restriction on the present disclosure or application or use thereof.

Techniques, methods and devices known to those skilled in the prior art may not be discussed in detail; however, such techniques, methods and devices shall be regarded as part of the description where appropriate.

In all the examples illustrated and discussed herein, any specific value shall be interpreted as illustrative rather than restrictive. Different values may be available for alternative examples of the exemplary embodiments.

It is to be noted that similar reference numbers and alphabetical letters represent similar items in the accompanying drawings. In the case that a certain item is identified in a drawing, further reference thereof may be omitted in the subsequent drawings.

### <Hardware Configuration>

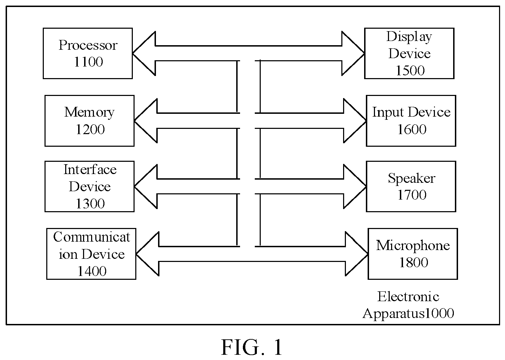

The method of an embodiment of the present disclosure may be implemented by at least one electronic apparatus. Specifically, there may be provided on the at least one electronic apparatus a device 8000 for implementing the method. Fig. 1 shows a hardware structure of an electronic apparatus which may be a portable computer, a desktop computer, a workstation, a server, etc., or any other apparatus having a computing device such as a processor and a storage device such as a memory, which is not limited herein.

As shown in Figure 1, the electronic apparatus 1000 may include a processor 1100, a memory 1200, an interface device 1300, a communication device 1400, a display device 1500, an input device 1600, a speaker 1700, a microphone 1800, etc. Here, the processor 1100 is configured for execution of computer programs. The computer programs may be written with instruction sets such as x86, Arm, RISC, MIPS, SSE and other architectures. The memory 1200 includes, for example, a ROM (read only memory), a RAM (random access memory), a non-volatile memory such as a hard disk, etc. The interface device 1300 includes, for example, a USB interface, a headset interface, etc. The communication device 1400 is capable of conducting, for example, wired or wireless communication, specifically including Wifi communication, Bluetooth communication, 2G/3G/4G/5G communication, etc. The display device 1500 may be, for example, a liquid crystal display screen, a touch display screen, etc. The input device 1600 may include, for example, a touch screen, a keyboard, a somatosensory input, etc. The electronic apparatus 1000 may output voice information through the loudspeaker 1700, and can collect voice information through the microphone 1800.

The electronic apparatus shown in Fig. 1 is merely illustrative and in no way implies any restriction on the present disclosure, its application or use. In an embodiment of the present disclosure, the memory 1200 of the electronic apparatus 1000 is for storing instructions, and the instructions are used to control the processor 1100 to operate to execute the method for execution of the automated machine learning process in the embodiment of the present disclosure. The instructions may be designed by those skilled in the art according to the technical solutions disclosed in the present disclosure. The instructions control operations of the processor in a way known to those skilled in the art which will not be described in detail here.

In one embodiment, an apparatus including at least one computing device and at least one storage device is provided, the at least one storage device is configured to store instructions, the instructions being configured to cause the at least one computing device to execute the method of an embodiment of the disclosure.

The apparatus may include at least one electronic apparatus 1000 shown in Figure 1 to provide at least one computing device, such as a processor, and at least one storage device, such as a memory, which are not limited herein.

### <Method Embodiment>

In the embodiment, a method for execution of an automated machine learning process is provided. The method for execution of an automated machine learning process may be implemented by an electronic apparatus, which may be the electronic apparatus 1000 as shown in Figure 1.

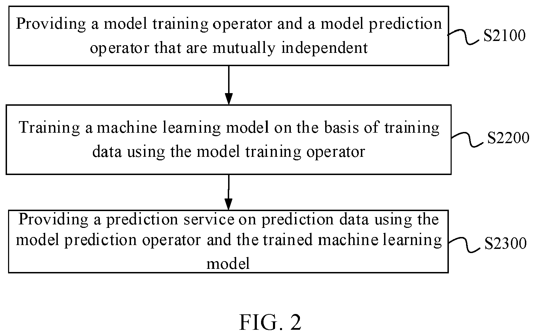

As shown in Figure 2, the method for execution of the automated machine learning process in this embodiment may include the following steps S2100 to S2300.

In Step S2100, there are provided a model training operator and a model prediction operator that are mutually independent.

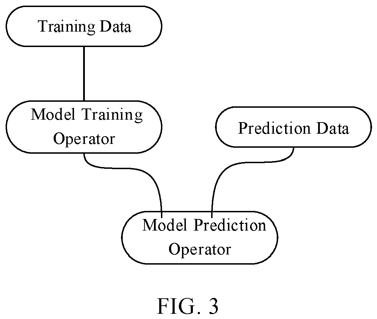

The model training operator is a tool for data preprocessing of input training data, conducting feature engineering on training data that has undergone data preprocessing, and training the model according to results of feature engineering to obtain the machine learning model. In this embodiment, a modeler may edit content of the model training operator in advance, and then provide identification information of the edited model training operator, which may be e.g., name of the model training operator. As shown in Figure 3, it may be simply "model training operator". During use, the user may directly drag the "model training operator".

The model prediction operator is a tool for data preprocessing of input prediction data, conducting feature engineering on prediction data that has undergone data preprocessing, and predicting results of feature engineering using the machine learning model to obtain prediction results. In this embodiment, the modeler edits content of the model prediction operator in advance, and then provide identification information of the edited model prediction operator, which may be e.g., name of the model training operator. As shown in Figure 3, it may be simply "model prediction operator". During use, the user may directly drag the "model prediction operator".

In this embodiment, a graphical user interface may be provided. In an operator node of the graphical user interface, there may be provided a "model training operator" node and a "model prediction operator" node, respectively. As shown in Figure 3, when model training on the training data is needed, the "model training operator" may be dragged to the graphical user interface for execution of the automated machine learning process, so as to obtain a "model training operator" node. Besides, when model prediction on the prediction data is needed, the "model prediction operator" may be dragged to the graphical user interface for execution of the automated machine learning process, so as to obtain a "model prediction operator" node.

Upon provision of the model training operator and the model prediction operator that are mutually independent, go to:

Step S2200, training the machine learning model on the basis of the training data using the model training operator.

In this embodiment, different machine learning problems are provided with different training data, which may be for example a training data set corresponding to a variety of application scenarios, the training data set being stored in advance in a designated location of the electronic apparatus executing the embodiment of the present disclosure. Each training data set may include multiple items of training data, such as annotated image data, one or more annotated text data tables, annotated voice data, etc.

In this embodiment, a graphical user interface may be provided. From a data node of the graphical user interface, training data corresponding to the application scenarios may be selected. As shown in Figure 3, when model training on training data is needed, drag the training data to the graphical user interface for execution of the automated machine learning process, so as to obtain a "training data" node and connect it with the "model training operator" node. Right-click the "model training operator", select Run, and then use the model training operator to train the machine learning model on the basis of the training data.

It should be noted that the machine learning model in the embodiments of the present disclosure may be used to predict image categories, text categories, voice emotions, fraudulent transactions, advertisement click through rates, etc. Machine learning models are designed to predict problems related to objects or events in related scenarios. For example, they may be used to predict image categories, predict text in images, predict text categories, predict voice emotion categories, predict fraudulent transactions, predict advertising click through rates, predict commodity prices, etc., so that the prediction results may be directly used as the basis for decision-making or further combined with other rules to become the basis for decision-making.

In one embodiment, the scenarios for which the machine learning model in the embodiments of the present disclosure may be used include, but are not limited to, the following scenarios:
Image processing scenarios, including: optical character recognition (OCR), face recognition, object recognition and image classification. More specifically, for example, OCR may be applied to bill (such as invoice) recognition, handwritten character recognition, etc.; face recognition may be applied to security fields, etc.; object recognition may be applied to traffic sign recognition in automated driving scenarios; and image classification may be applied to "snapshop", "find the same style", etc. on e-commerce platforms.

Speech recognition scenarios, including products that can conduct human-computer interaction through speech, such as the voice assistant of mobile phones (such as Siri of iPhone), smart loudspeaker boxes, etc.

Natural language processing scenarios, including: review of text (such as contracts, legal documents, customer service records, etc.), content spam identification (such as spam SMS identification), and text classification (emotions, intentions, themes, etc.).

Automated control scenarios, including: mine group regulation operation prediction, wind turbine generator unit regulation operation prediction and air conditioning system regulation operation prediction. Specifically, for a mine group, prediction may be performed on a group of regulation operations with high recovery ratio; for a wind turbine generator unit, prediction may be performed on a group of regulation operations with high power generation efficiency; and for an air conditioning system, prediction may be performed on a group of regulation operations that can meet the needs while saving energy consumption.

Intelligent question and answer scenarios, including chat robots and intelligent customer service.

Business decision-making scenarios, including: scenarios in the financial technology field, medical field and municipal field, among which:
The financial technology field including: marketing (such as coupon use prediction, advertising click behavior prediction, user portrait mining, etc.) and customer acquisition, anti-fraud, anti-money-laundering, underwriting and credit scoring, and commodity price prediction.

The medical field including: disease screening and prevention, personalized health management and auxiliary diagnosis.

The municipal field including: social governance, supervision and law enforcement, resource environment and facility management, industrial development and economic analysis, public services and livelihood security, and smart cities (allocation and management of various urban resources such as public transport, online car hailing, and bike sharing).

Business recommendation scenarios, including: recommendations via news, advertising, music, consulting, video and financial products (such as wealth management, insurance, etc.).

Search scenarios, including: web search, image search, text search, video search, etc.

Abnormal behavior detection scenarios, including: abnormal behavior detection of power consumption of State Grid users, malicious network traffic detection, and abnormal behavior detection in operation logs.

In this embodiment, the step S2200 uses a model training operator to train a machine learning model on the basis of training data, which step can further include the following steps S2210-S2230:
Step S2210, providing a configuration interface for configuring model training in response to triggering operation on the model training operator.

In this step S2210, for example, a click operation may be performed on the model training operator; and the electronic apparatus provides a configuration interface for configuring model training in response to the click operation.

The configuration interface includes at least one of the following configuration items: input source configuration item of a machine learning model; applicable problem type configuration item of a machine learning model; algorithm mode configuration item for training a machine learning model; optimization objective configuration item of a machine learning model; and field name configuration item of a prediction objective field of a machine learning model.

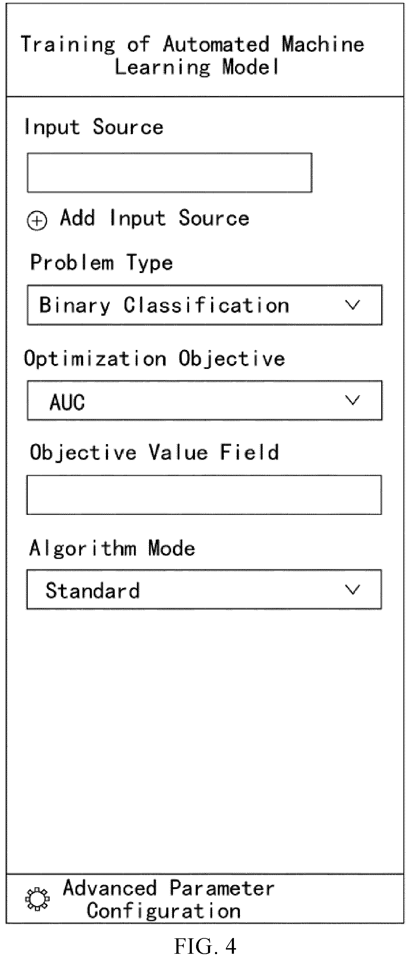

In general, the above input source is one input source by default. Specifically, it means that training data is a data table. At this time, the model training operator has only one input node, as shown in Figure 4. By clicking "Add Input Source", an input node of the model training operator is added, and then multiple data tables may be accessed as training data. Here, the model training operator is also used to splice multiple data tables according to a splicing primary key.

The above applicable problem types may include any one of a binary classification problem, a regression problem and a multi classification problem. For example, a drop-down menu box for selecting the applicable problem type may be provided as shown in Figure 4, so as to obtain the problem type selected by the user through the drop-down menu box as the problem type applicable to the machine learning model.

The above algorithm mode can include any one of fast mode, standard model and fine model. The algorithm mode defaults to standard mode. For example, a drop-down menu box for selecting an algorithm mode may be provided as shown in Figure 4, so as to obtain the algorithm mode selected by the user through the drop-down menu box as the algorithm mode applicable to the machine learning model. It should be noted that the fast mode does not generate features: it only uses minimal data to quickly generate machine learning models. The standard mode uses most of the training data for data preprocessing, but only uses some feature rules that have good effects on most of the training data to generate features. The fine mode uses the full amount of training data as long as it does not cause memory overflow, and uses all the feature rules in exploration to generate machine learning models.

The objectives for the above optimizations include at least one of mean square error (MSE), mean absolute error (MAE), mean absolute percentage error (MAPE), R2, AUC, KS, Recall, Precision, Accuracy, F1, and Logloss. For different problem types, different options are provided, for example: MSE, MAE, MAPE, R2, etc. for regression problems, while AUC, KS, Recall, Precision, Accuracy, f1, Logloss, etc. for binary classification problems.

The field name of the above prediction obj ective field is used to represent the field name of the model prediction objective field. For example, it may be an input box that provides the field name of the prediction objective field as shown in Figure 4, so that the user can manually enter the field name of the field where the model prediction objective is located.

Step S2220, obtaining training samples by data preprocessing and feature engineering processing on the training data according to configuration information input through the configuration interface.

Here we continue to refer to the configuration interface shown in Figure 4 as an example. By default, there is provided one input source, the problem type is a binary classification problem, the optimization objective is AUC, the algorithm mode is standard mode, and the objective value field is manually entered by the user (although the objective value field entered is not shown in Figure 4).

The data preprocessing of training data in this step S2220 may include at least one of the following:

### Item 1, performing data type conversion of the training data.

In this item, since the actual input business data is of a variety of input data types and formats, here, for example, different data types may be uniformly converted to the widely used PandasDataFrame format.

### Item 2, sampling the training data.

In this item, overall down sampling for the full amount of data input may be conducted, leaving only a number of samples preset by the algorithm, where the number of samples left is automatically configured by the algorithm according to the environment of the development environment. For example, for classification tasks, samples may be sampled hierarchically, while for other tasks, random sampling is adopted.

### Item 3, annotating the training data as labeled data and unlabeled data.

In this item, the labeled data may be used for model training, and both the labeled data and unlabeled data may be used for feature generation.

### Item 4, automatically identifying a data field type of the training data.

This item may be used to convert the data field type of each attribute information contained in the training data into the business type needed in the subsequent feature engineering. The business type is classified according to the physical meaning of the data attributes and is labeled on the data in advance. The business type may be time type, discrete value type, continuous value type, array type, and dictionary type, for example. Generally, if users do not define business types on their own initiatives, the algorithm will convert floating point type to continuous value type, non-floating-point type to discrete value type, etc.

### Item 5, filling in missing values of the training data.

In this item, for a column A, a corresponding A' will be generated. On the ith sample, if A_i is empty then its value is A'_i=1, otherwise A'_i = 0. For example, any attribute information A is mapped to a new attribute information A' correspondingly. The value rule in the new attribute information A' is: for a specific value in attribute information A, if the value is empty, the specific value of the new attribute information A' mapped from the value will be 1. If the value is not empty, the specific value of the new attribute information A' mapped from the value is 0.

### Item 6, analyzing an initial time field of the training data, obtaining and adding a new time field, and deleting the initial time field.

In this item, the time type columns in different formats may be converted into a unified data format, Date. The date column may be analyzed to get the year, month, day, week and hour information, which are respectively added to the original training data as new discrete columns and new continuous value columns. At the same time, the time stamp of the Date column is regarded as a new column of continuous value feature, and the initial time type feature in the original data is deleted.

### Item 7, automatically identifying non-numerical data in the training data, and hashing the non-numerical data.

In this item, judgment may be made as to whether there is a column whose data storage type is neither integer nor floating-point number. If so, map it into an integer string using hash algorithm. The model can use the newly generated integer string to learn the information in the original data column.

In this embodiment, data preprocessing and feature engineering processing are performed on the training data in the step S2220. In addition, obtaining training samples can further include the following steps S2221-S2224:
Step S2221, sampling the training data that has undergone data preprocessing.

In this step S2221, the training data that has undergone data preprocessing may be down sampled, e.g., randomly sampled, to reduce the amount of training data, so as to improve calculation speed of subsequent feature importance values.

Step S2222, performing feature pre-selection on the training data that has undergone the sampling, to obtain basic features.

With the feature pre-selection on the training data that has undergone the sampling of this step S2222, features with high feature importance value may be screened out and selected as basic features.

In this embodiment, in step S2222, feature pre-selection is performed on the training data that has undergone the sampling, and the basic features obtained can further include the following steps S2222-1-S2222-3:
Step S2222-1, extracting all attribute information included in the training data that has undergone the sampling.

The attribute information is used to form features. For example, the training data may include at least one of the information that the user wishes to recommend to the consumer and the basic feature information of the consumer (for example, information topic, information display location, consumer identifier, gender, age, height, weight, hobbies, etc.).

Step S2222-2, acquiring feature importance values of each attribute information.

In S2222-2 of this step, the feature importance value, for example, may be any of the following: Hellinger distance, random forest feature segmentation gain, and gradient lifting decision tree feature segmentation gain. For example, for classification tasks, the Hellinger distance may be calculated as the feature importance value of each attribute information. In an alternative example, for regression tasks, the random forest feature segmentation gain may be calculated as the feature importance value of each attribute information.

In the step S2222-2, for example, the above-mentioned feature importance values such as the information topic, information display location, consumer identifier, gender, age, height, weight, hobbies, etc. may be ranked in descending order to obtain a ranking result.

Step S2222-3, obtaining the basic features according to the feature importance values.

In this embodiment, in step S2222-3, obtaining the basic features according to the feature importance values can further include the following steps S2222-31-S2222-32:
Step S2222-31, ranking all the feature importance values to obtain a ranking result.

In this step S2222-31, for example, the feature importance values of the above information topics, information display locations, consumer identifiers, gender, age, height, weight, hobbies, etc. may be ranked in descending order to obtain the ranking result.

Step S2222-32, acquiring a first predetermined quantity of attribute information as the basic features according to the ranking result.

The first predetermined quantity may be a value preset according to a specific application scenario or a simulation test. For example, for different application scenarios, values corresponding to these application scenarios may be preset. The values corresponding to different application scenarios may be the same or different. For example, the same value may be preset for all application scenarios. This embodiment does not limit the specific method for setting the first predetermined quantity. The first set quantity can also be dynamically adjusted according to the computing resources.

In this step S2222-32, for example, the attribute information corresponding to the first predetermined quantity of feature importance values may be obtained as the basic feature, according to the above ranking result in descending order.

Step S2223, performing feature derivation on the basic features to obtain derived features.

In this embodiment, in step S2223, feature derivation is performed on the basic features, and the derived features may further include: performing at least one of statistical calculation and feature combination on the basic features to obtain the derived features, using preset feature generation rules.

For example, the preset feature generation rules mentioned above may include any one or more of Count, Nunique, NumAdd, Num Subtract, NumMultip, NumDivision, CatNumMean, CatNumStd, CatNumMax, CatNumMin, TumeSubtract, NumOutlier, and CatTimeDiff.

In this step S2223, the parameters required for feature generation may be stored to accelerate the feature generation process of the model prediction operator.

Step S2224a, generating training samples according to the basic features and the derived features.

In this embodiment, after obtaining the derived features according to step S2223 above, the following steps S2224b-1~S2224b-2 may be further included:
Step S2224b-1, performing feature post-selection on the basic features and the derived features.

In this embodiment, performing feature post-selection on the basic features and the derived features in step S2224b-1 may further include the following steps S2224b-11∼S2224b-13:
Step 52224b-11, acquiring feature importance values of each basic feature and each derived feature.

In this step S2224b - 11, the feature importance value, for example, may be any of the following: Hellinger distance, random forest feature segmentation gain, and gradient lifting decision tree feature segmentation gain. and gradient lifting decision tree feature segmentation gain. For example, for regression tasks, random forest feature segmentation gain may be calculated as the feature importance value of each feature.

Step S2224b-12, ranking all the feature importance values to obtain a ranking result.

In S2224b - 12 of this step, for example, the feature importance values of each basic feature and each derived feature acquired may be ranked in descending order to obtain the ranking result.

Step S2224b-13, acquiring a second predetermined quantity of features as required features for generating training samples, according to the ranking result.

The second predetermined quantity may be a value preset according to a specific application scenario or a simulation test. For example, for different application scenarios, values corresponding to the application scenarios may be preset. The values corresponding to different application scenarios may be the same or different. In an alternative example, the same value may be preset for all application scenarios. This embodiment does not limit the specific method for presetting the second predetermined quantity.

In this step S2224b-13, features corresponding to the feature importance values of the abovementioned second predetermined quantity may be obtained as the required features for generating training samples, for example, according to the above ranking result in descending order.

In this embodiment, it is also possible to preset a threshold parameter r, form a feature importance value set according to the obtained feature importance value, and obtain the median m of this set. In this set, if a feature importance value is greater than r * m, a feature corresponding to this feature importance value is retained.

Step S2224b-2, generating training samples according to features obtained through the feature post-selection.

Step S2230, generating training samples according to features obtained through the feature post-selection.

For example, the model training algorithm may be at least one of gradient lifting decision tree, random forest, factor decomposer, domain sensitive factor decomposer, and linear regression.

In actual operation, this embodiment also supports the "early stop" strategy. Specifically, when multiple algorithms are trained simultaneously, it is possible to determine in advance which algorithm is more suitable for training data according to a certain strategy, so as to pause the exploration on unsuitable algorithms and spend time and resources on more suitable algorithms.

After training the machine learning model on the basis of the training data and using the model training operator, enter:
Step S2300, providing a prediction service on prediction data using the model prediction operator and the trained machine learning model.

The prediction data may be data that users (for example, information service providers that provide information recommendation) wish to obtain associated prediction results. For example, when a user wants to know a prediction result about whether the information he wishes to recommend to his customers (for example, end consumers) will be accepted (that is, whether it will be clicked or read by consumers), the prediction data would be the attribute information data of the information that the user wishes to recommend.

As shown in Figure 3, when it is necessary to provide a prediction service on prediction data, drag the "model prediction operator" to the graphical user interface that executes the automated machine learning process in order to obtain the "model prediction operator" node. Then, drag the prediction data to the graphical user interface that executes the automated machine learning process to obtain the "prediction data" node. Then, connect the "Prediction Data" node with the "Model Prediction Operator" node, right-click "Model Prediction", select Run, and then use the model prediction operator to provide batch prediction service on the basis of the prediction data.

In this embodiment, in step S2300, providing a prediction service on prediction data using the model prediction operator and the trained machine learning model may further include the following steps S2310-S2330:
Step S2310, providing a configuration interface for configuring model training in response to triggering operation on the model training operator.

In this step S2310, for example, a click operation may be implemented on the model prediction operator, and the electronic apparatus provides a configuration interface for configuring the batch prediction service in response to the click operation.

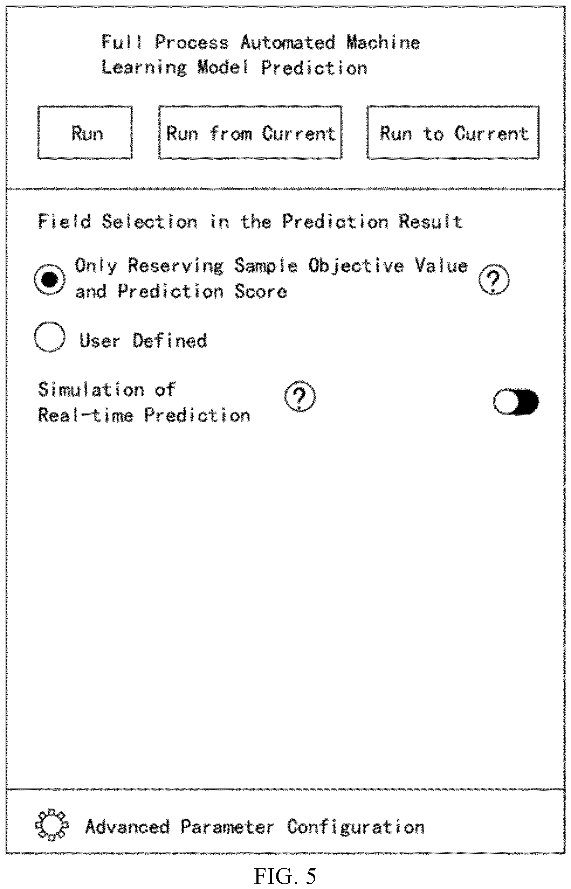

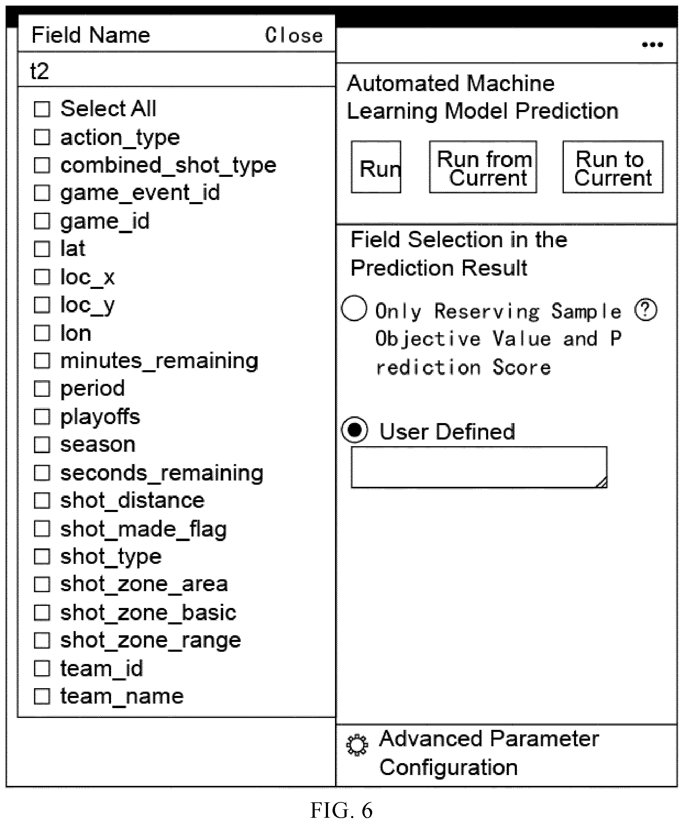

As shown in Figure 5, the configuration interface includes at least one of a configuration item of field selection in a prediction result, and a configuration item of switching state of a real-time prediction service. The abovementioned field selection in the prediction result can include at least one of the following: (i) only reserving sample objective value and prediction score, and (ii) user-defined. For example, if "Only reserving sample objective value and prediction score" is selected, the objective value of the sample and model prediction result will be displayed in the prediction result. In an alternative example, if "User defined" is selected, a text box will be provided for users to enter field names, and the names of all available fields will be provided for users to check. The checked fields will automatically appear in the text box, as shown in Figure 6.

A batch prediction mode works in the case when the switch status of the simulated real-time prediction service is "off', here the prediction data as a whole participate in the prediction, but prediction results of each sample may influence each other. When the switch state of the simulated real-time prediction service is "on", the prediction samples will not influence each other, and the prediction results are completely consistent with the real-time prediction.

Step S2320, obtaining prediction samples by data preprocessing and feature-update processing on the prediction data according to configuration information input through the configuration interface.

Here we continue to take the configuration interface shown in Figure 5 as an example. The field selection in the prediction result is configured as "Only reserving sample objective value and prediction score", and the switch status of the simulated real-time prediction service is "off'.

The data pre-processing on the prediction data in this step S2320 can include at least one item of the following:
Item 1, performing data type conversion on the prediction data.

Item 2, performing data partition on the prediction data.

Regarding this item, first of all, data quantity of the prediction data may be determined. In the case when the data quantity is not fit for one-time processing in the memory, the prediction data may be partitioned into multiple parts, and the multiple parts may be stored in a hard disk, so that subsequent data preprocessing, feature engineering and result prediction may be carried out in batches.

Item 3, aligning attribute information in the prediction data with attribute information in the training data that has undergone data preprocessing.

In this item, when the prediction data is being read, a type of each column in the prediction data is aligned with a type of a corresponding column in the training data.

Item 4, automatically identifying a data field type of the prediction data.

Item 5, filling in missing values of the prediction data.

Item 6, analyzing an initial time field in the prediction data, obtaining and adding a new time field, and deleting the initial time field.

In this embodiment, in this step S2320, obtaining prediction samples by data preprocessing and feature-update processing on the prediction data may further include the following steps S2321-S2324:
Step S2321, screening out and selecting a feature set from the result of feature engineering.

The feature set includes basic features and derived features.

Step S2322, identifying feature generation rules corresponding to the derived features.

Step S2323, deleting attribute information unrelated to the basic features from the attribute information of the aligned prediction data, to obtain basic features of the prediction data.

Step S2324, generating, according to the feature generation rules, derived features of the prediction data using the attribute information of the prediction data that has undergone the deletion.

Step S2325, generating prediction samples according to the basic features of the prediction data and the derived features of the prediction data.

Step S2330, providing prediction results for prediction samples, using the trained machine learning model.

In this embodiment, a plurality of trained machine learning models may be used for providing prediction results respectively for prediction samples. An average value of prediction results for the plurality of machine learning models may be used as the final prediction result corresponding to the prediction data.

The method according to this embodiment can provide a model training operator and a model prediction operator that are mutually independent, accomplish training of a machine learning model through the model training operator, and provide a prediction service through the model prediction operator. Accordingly, full process cyclic operation may be achieved for a plurality of processes such as model production and model application, thus greatly reducing access threshold and cost of machine learning.

In addition, it can adapt to different scenarios of structured data, supporting for example binary classification scenarios, multi classification scenarios, regression scenarios and clustering scenarios.

In one embodiment, a configuration interface for real-time prediction service may be provided to provide real-time prediction service on prediction data. In this embodiment, the method for execution of the automated machine learning process may further include the following steps S7100-S7300:
Step S7100 providing a configuration interface for configuring a real-time prediction service according to an operation of configuring a real-time prediction service;
The configuration interface includes at least one of: a configuration item for model selection rules for selecting an online machine learning model from the trained machine learning models, and a configuration item for application resources.

Step S7200, receiving a prediction service request including the prediction data through the API address provided in the configuration interface.

Step S7300, obtaining a prediction result on the prediction data in response to the received prediction service request using the selected machine learning model, and sending the prediction result through the API address.

In one embodiment, a human-computer interaction interface may be provided to support modelers in operation thereby obtaining model training operators. In this embodiment, the method for execution of the automated machine learning process may further include the following steps S8100-S8300:
Step S8100, providing an editing interface according to an operation of editing the model training operator.

In this embodiment, the electronic apparatus may provide an editing interface in response to the operation of editing the model training operator.

The editing interface may include an editing entry, which may be an input box, a drop-down list, a voice input, etc.

Step S8200, obtaining operator content input through the editing interface.

The operator content includes an operation command of data preprocessing on input training data, an operation command of feature engineering on training data that has undergone data preprocessing, and an operation command of model training according to results of feature engineering.

In this embodiment, the modeler can input the operator content through the editing entry provided by the editing interface, so that the electronic apparatus can obtain the operator content.

Step S8300, encapsulate the operator content to obtain the model training operator.

In this embodiment, the model training operator may be obtained by encapsulating the operation command of data preprocessing on the input training data, the operation command of feature engineering on the training data that has undergone data preprocessing, and the operation command of model training according to results of the feature engineering.

In one embodiment, a visualization interface is also provided to visually display the model training scheme obtained in the model training process. In the embodiment, the method for execution of the automated machine learning process may further include the following steps S9100-S9200:
Step S9100, obtaining the model training scheme on the basis of the trained machine learning model.

The model training scheme includes any one or more of: an algorithm for training the machine learning model, hyperparameters of the machine learning model, effect of the machine learning model, and feature information.

The algorithm includes but is not limited to any one of the above mentioned gradient lifting decision tree, random forest, factor decomposer, domain sensitive factor decomposer and linear regression.

The hyperparameters may include model hyperparameters and training hyperparameters.

The above-mentioned model hyperparameters are the hyperparameters for defining the model, for example but not limited to: activation functions (such as identity functions, S-type functions, truncated oblique wave functions, etc.), the number of hidden layer nodes, the number of convolution layer channels, and the number of fully connected layer nodes.

The above training hyperparameters are hyperparameters used to define the model training process, for example but not limited to: learning rate, batch size, and number of iterations.

The feature information includes any one or more of: feature quantity, feature generation method and feature importance analysis results.

Step S9200, visualizing the model training scheme.

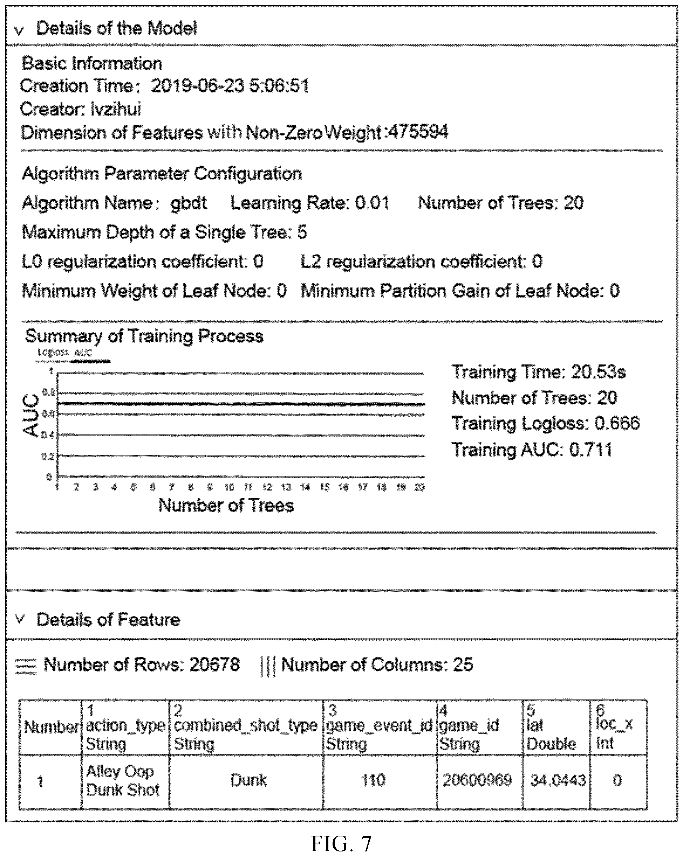

In S9200, a visualization result may be the graphical user interface shown in Figure 7.

In this embodiment, the method for execution of the automated machine learning process may further include a step of retraining the machine learning model according to the preview results of the visualization.

In this embodiment, if the preview result does not meet the requirements, return to the model training step and perform the model training again by modifying the configuration information relating to the model training configuration in the configuration interface.

### <Device embodiment>

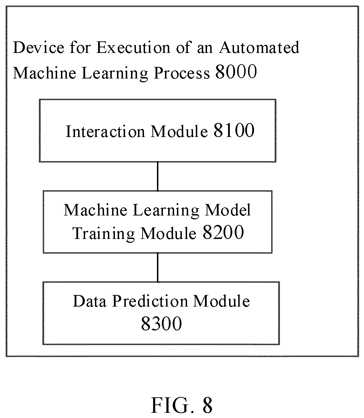

In this embodiment, a device 8000 for execution of an automated machine learning process is provided, as shown in Figure 8, which includes an interaction module 8100, a machine learning model training module 8200, and a data prediction module 8300.

The interaction module 8100 is configured to provide a model training operator and a model prediction operator that are mutually independent.

The machine learning model training module 8200 is configured to train a machine learning model on the basis of stored training data using the model training operator.

The data prediction module 8300 is configured to provide a prediction service on collected prediction data using the model prediction operator and the trained machine learning model.

In one embodiment, the device 8000 further includes a model training operator acquisition module (not shown in the figure), which is configured to:
provide an editing interface according to operation of editing the model training operator;
acquire operator content input through the editing interface, wherein the operator content includes an operation command of data preprocessing on input training data, an operation command of feature engineering on the training data that has undergone data preprocessing, and an operation command of model training according to the results of feature engineering; and
encapsulate the operator content to obtain the model training operator.

In one embodiment, the machine learning model training module 8200 is specifically configured to:
provide a configuration interface for configuring model training in response to triggering operation on the model training operator;
obtain training samples by data preprocessing and feature engineering processing on the training data according to configuration information input through the configuration interface; and
train a machine learning model on the basis of the training samples using at least one model training algorithm.

In one embodiment, the configuration interface includes at least one of the following configuration items: input source configuration item of a machine learning model; applicable problem type configuration item of a machine learning model; algorithm mode configuration item for training a machine learning model; optimization objective configuration item of a machine learning model; and field name configuration item of a prediction objective field of a machine learning model.

In one embodiment, the machine learning model training module 8200 is specifically configured to perform at least one of the following on the training data:
Item 1, performing data type conversion of the training data;
Item 2, sampling the training data;
Item 3, annotating the training data as labeled data and unlabeled data;
Item 4, automatically identifying a data field type of the training data;
Item 5, filling in missing values of the training data;
Item 6, analyzing an initial time field of the training data, obtaining and adding a new time field, and deleting the initial time field;
Item 7, automatically identifying non-numerical data in the training data, and hashing the non-numerical data.

In one embodiment, the machine learning model training module 8200 is specifically configured to:
sample the training data that has undergone data preprocessing;
perform feature pre-selection on the training data that has undergone the sampling, to obtain basic features;
perform feature derivation on the basic features to obtain derived features; and
generate training samples according to the basic features and the derived features.

In one embodiment, the machine learning model training module 8200 is specifically configured to:
extract all attribute information included in the training data that has undergone the sampling, wherein the attribute information is used to form features;
acquire feature importance values of each attribute information; and
obtain the basic features according to the feature importance values.

In one embodiment, the machine learning model training module 8200 is specifically configured to:
rank all the feature importance values to obtain a ranking result; and
acquire a first predetermined quantity of attribute information as the basic features according to the ranking result.

In one embodiment, the machine learning model training module 8200 is specifically configured to:
perform at least one of statistical calculation and feature combination on the basic features to obtain the derived features, using preset feature generation rules.

In one embodiment, the machine learning model training module 8200 is specifically configured to:
perform feature post-selection on the basic features and the derived features; and
generate training samples according to features obtained through the feature post-selection.

In one embodiment, the machine learning model training module 8200 is specifically configured to:
acquire feature importance values of each basic feature and each derived feature,
rank all the feature importance values to obtain a ranking result; and
acquire a second predetermined quantity of features as required features for generating training samples, according to the ranking result.

In one embodiment, the device 8000 further includes a model training scheme display module (not shown in the figure), which is configured to:
obtain a model training scheme on the basis of the trained machine learning model; and
visualize the model training scheme;
wherein the model training scheme includes any one or more of: an algorithm used to train the machine learning model, hyperparameters of the machine learning model, effects of the machine learning model, and feature information;
wherein the feature information includes any one or more of feature quantity, feature generation method and feature importance analysis results.

In one embodiment, the machine learning model training module 8200 is specifically configured to:
retrain the machine learning model according to the preview results of the visualization.

In one embodiment, the data prediction module 8300 includes a batch prediction unit (not shown in the figure), which is configured to:
provide a configuration interface for configuring the batch prediction service in response to the triggering operation of the model prediction operator;
obtain prediction samples by data preprocessing and feature-update processing on the prediction data according to configuration information input through the configuration interface; and
provide prediction results for the prediction samples using the trained machine learning model.

In one embodiment, the configuration interface includes at least one of:
a configuration item of field selection in a prediction result, and
a configuration item of switching state of a simulated real-time prediction service.

In one embodiment, the data prediction module 8300 includes a real-time prediction unit (not shown in the figure), which is configured to:
provide a configuration interface for configuring a real-time prediction service according to an operation of configuring a real-time prediction service;
receive a prediction service request including the prediction data through the API address provided in the configuration interface; and
obtain a prediction result on the prediction data in response to the received prediction service request using the selected machine learning model, and sending the prediction result through the API address.

In one embodiment, the configuration interface includes at least one of:
a configuration item for model selection rules for selecting an online machine learning model from the trained machine learning models, and
a configuration item for application resources.

### <Apparatus embodiment>

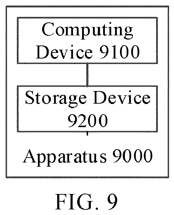

As shown in Figure 9, this embodiment provides an apparatus 9000 including at least one computing device 9100 and at least one storage device 9200. The at least one storage device 9200 is configured to storage instructions. The instructions are configured, upon being executed by the at least one computing device, to cause the at least one computing device 9100 to execute the method for execution of an automated machine learning process according to an embodiment of the present disclosure.

### <Storage medium embodiment>

This embodiment provides a computer-readable storage medium having a computer program stored thereon, which computer program, when executed by a processor, implements the method according to any of the above method embodiments.

The present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. It is well-known to a person skilled in the art that the implementations of using hardware, using software or using the combination of software and hardware can be equivalent with each other.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein. The scope of the present disclosure is defined by the attached claims.

### Industrial applicability

Embodiments of the disclosure enable full process cyclic operation in a plurality of processes such as model production and model application, and thus greatly reducing access threshold and cost of machine learning.

## Claims

1. A method for execution of an automated machine learning process, comprising:
providing a model training operator and a model prediction operator that are mutually independent;
training a machine learning model on the basis of training data using the model training operator; and
providing a prediction service on prediction data using the model prediction operator and the trained machine learning model.

2. The method of claim 1, further comprising a step of obtaining the model training operator, which includes:
providing an editing interface according to operation of editing the model training operator;
acquiring operator content input through the editing interface, wherein the operator content includes an operation command of data preprocessing on input training data, an operation command of feature engineering on the training data that has undergone data preprocessing, and an operation command of model training according to the results of feature engineering; and
encapsulating the operator content to obtain the model training operator.

3. The method of claim 1 or 2, wherein said training a machine learning model on the basis of training data using the model training operator comprises:
providing a configuration interface for configuring model training in response to triggering operation on the model training operator;
obtaining training samples by data preprocessing and feature engineering processing on the training data according to configuration information input through the configuration interface; and
training a machine learning model on the basis of the training samples using at least one model training algorithm.

4. The method of claim 3, wherein the configuration interface includes at least one of the following configuration items:
input source configuration item of a machine learning model;
applicable problem type configuration item of a machine learning model;
algorithm mode configuration item for training a machine learning model;
optimization objective configuration item of a machine learning model; and
field name configuration item of a prediction objective field of a machine learning model.

5. The method of claim 3, wherein the data preprocessing on the training data comprises at least one of the following items:
Item 1, performing data type conversion of the training data;
Item 2, sampling the training data;
Item 3, annotating the training data as labeled data and unlabeled data;
Item 4, automatically identifying a data field type of the training data;
Item 5, filling in missing values of the training data;
Item 6, analyzing an initial time field of the training data, obtaining and adding a new time field, and deleting the initial time field;
Item 7, automatically identifying non-numerical data in the training data, and hashing the non-numerical data.

6. The method of claim 3, wherein said obtaining training samples by data preprocessing and feature engineering processing on the training data comprises:
sampling the training data that has undergone data preprocessing;
performing feature pre-selection on the training data that has undergone the sampling, to obtain basic features;
performing feature derivation on the basic features to obtain derived features; and
generating training samples according to the basic features and the derived features.

7. The method of claim 6, wherein said performing feature pre-selection on the training data that has undergone the sampling to obtain basic features comprises:
extracting all attribute information included in the training data that has undergone the sampling, wherein the attribute information is used to form features;
acquiring feature importance values of each attribute information; and
obtaining the basic features according to the feature importance values.

8. The method of claim 7, wherein said obtaining the basic features according to the feature importance values comprises:
ranking all the feature importance values to obtain a ranking result; and
acquiring a first predetermined quantity of attribute information as the basic features according to the ranking result.

9. The method of claim 6, wherein said performing feature derivation on the basic features to obtain derived features comprises:
performing at least one of statistical calculation and feature combination on the basic features to obtain the derived features, using preset feature generation rules.

10. The method of claim 6, wherein the method further comprises, after the derived features are obtained:
performing feature post-selection on the basic features and the derived features; and
generating training samples according to features obtained through the feature post-selection.

11. The method of claim 10, wherein said performing feature post-selection on the basic features and the derived features comprises:
acquiring feature importance values of each basic feature and each derived feature,
ranking all the feature importance values to obtain a ranking result; and
acquiring a second predetermined quantity of features as required features for generating training samples, according to the ranking result.

12. The method of any one of claims 1 to 11, further comprising:
obtaining a model training scheme on the basis of the trained machine learning model; and
visualizing the model training scheme;
wherein the model training scheme includes any one or more of: an algorithm used to train the machine learning model, hyperparameters of the machine learning model, effects of the machine learning model, and feature information;
wherein the feature information includes any one or more of feature quantity, feature generation method and feature importance analysis results.

13. The method of claim 12, further comprising:
a step of retraining the machine learning model according to the preview results of the visualization.

14. The method of any one of claims 1 to 13, wherein said providing a prediction service on prediction data using the model prediction operator and the trained machine learning mode comprises:
providing a configuration interface for configuring the batch prediction service in response to the triggering operation of the model prediction operator;
obtain training samples by data preprocessing and feature-update processing on the training data according to configuration information input through the configuration interface; and
providing prediction results for the prediction samples using the trained machine learning model.

15. The method of claim 14, wherein the configuration interface comprises at least one of:
a configuration item of field selection in a prediction result, and
a configuration item of switching state of a simulated real-time prediction service.

16. The method of claim 14, further comprising:
providing a configuration interface for configuring a real-time prediction service according to an operation of configuring a real-time prediction service;
receiving a prediction service request including the prediction data through the API address provided in the configuration interface; and
obtaining a prediction result on the prediction data in response to the received prediction service request using the selected machine learning model, and sending the prediction result through the API address.

17. The method of claim 16, wherein the configuration interface comprises at least one of:
a configuration item for model selection rules for selecting an online machine learning model from the trained machine learning models, and
a configuration item for application resources.

18. A device for execution of an automated machine learning process, comprising:
an interaction module, configured to provide a model training operator and a model prediction operator that are mutually independent;
a machine learning model training module, configured to train a machine learning model on the basis of stored training data using the model training operator; and
a data prediction module, configured to provide a prediction service on collected prediction data using the model prediction operator and the trained machine learning model.

19. The device of claim 18, wherein the device further comprises a model training operator acquisition module, which is configured to:
provide an editing interface according to operation of editing the model training operator;
acquire operator content input through the editing interface, wherein the operator content includes an operation command of data preprocessing on input training data, an operation command of feature engineering on the training data that has undergone data preprocessing, and an operation command of model training according to the results of feature engineering; and
encapsulate the operator content to obtain the model training operator.

20. The device of claim 18 or 19, wherein the machine learning model training module is specifically configured to:
provide a configuration interface for configuring model training in response to triggering operation on the model training operator;
obtain training samples by data preprocessing and feature engineering processing on the training data according to configuration information input through the configuration interface; and
train a machine learning model on the basis of the training samples using at least one model training algorithm.

21. The device of claim 20, wherein the configuration interface includes at least one of the following configuration items:
input source configuration item of a machine learning model;
applicable problem type configuration item of a machine learning model;
algorithm mode configuration item for training a machine learning model;
optimization objective configuration item of a machine learning model; and
field name configuration item of a prediction objective field of a machine learning model.

22. The device of claim 20, wherein the machine learning model training module is specifically configured to perform at least one of the following items on the training data:
Item 1, performing data type conversion of the training data;
Item 2, sampling the training data;
Item 3, annotating the training data as labeled data and unlabeled data;
Item 4, automatically identifying a data field type of the training data;
Item 5, filling in missing values of the training data;
Item 6, analyzing an initial time field of the training data, obtaining and adding a new time field, and deleting the initial time field;
Item 7, automatically identifying non-numerical data in the training data, and hashing the non-numerical data.

23. The device of claim 20, wherein the machine learning model training module is specifically configured to:
sample the training data that has undergone data preprocessing;
perform feature pre-selection on the training data that has undergone the sampling, to obtain basic features;
perform feature derivation on the basic features to obtain derived features; and
generate training samples according to the basic features and the derived features.

24. The device of claim 23, wherein the machine learning model training module is specifically configured to:
extract all attribute information included in the training data that has undergone the sampling, wherein the attribute information is used to form features;
acquire feature importance values of each attribute information; and
obtain the basic features according to the feature importance values.

25. The device of claim 24, wherein the machine learning model training module is specifically configured to:
rank all the feature importance values to obtain a ranking result; and
acquire a first predetermined quantity of attribute information as the basic features according to the ranking result.

26. The device of claim 23, wherein the machine learning model training module is specifically configured to:
perform at least one of statistical calculation and feature combination on the basic features to obtain the derived features, using preset feature generation rules.

27. The device of claim 23, wherein the machine learning model training module is specifically configured to:
perform feature post-selection on the basic features and the derived features; and
generate training samples according to features obtained through the feature post-selection.

28. The device of claim 27, wherein the machine learning model training module is specifically configured to:
acquire feature importance values of each basic feature and each derived feature,
rank all the feature importance values to obtain a ranking result; and
acquire a second predetermined quantity of features as required features for generating training samples, according to the ranking result.

29. The device of any one of claims 18 to 28, wherein the device further comprises a model training scheme display module which is configured to:
obtain a model training scheme on the basis of the trained machine learning model; and
visualize the model training scheme;
wherein the model training scheme includes any one or more of: an algorithm used to train the machine learning model, hyperparameters of the machine learning model, effects of the machine learning model, and feature information;
wherein the feature information includes any one or more of feature quantity, feature generation method and feature importance analysis results.

30. The device of claim 29, wherein the machine learning model training module is specifically configured to:
retrain the machine learning model according to the preview results of the visualization.

31. The device of any one of claims 18 to 30, wherein the data prediction module comprises a batch prediction unit which is configured to:
provide a configuration interface for configuring the batch prediction service in response to the triggering operation of the model prediction operator;
obtain prediction samples by data preprocessing and feature-update processing on the prediction data according to configuration information input through the configuration interface; and
provide prediction results for the prediction samples using the trained machine learning model.

32. The device of claim 31, wherein the configuration interface comprises at least one of:
a configuration item of field selection in a prediction result, and
a configuration item of switching state of a simulated real-time prediction service.

33. The device of claim 31, wherein the data prediction module comprises a real-time prediction unit configured to:
provide a configuration interface for configuring a real-time prediction service according to an operation of configuring a real-time prediction service;
receive a prediction service request including the prediction data through the API address provided in the configuration interface; and
obtain a prediction result on the prediction data in response to the received prediction service request using the selected machine learning model, and sending the prediction result through the API address.

34. The device of claim 33, wherein the configuration interface comprises at least one of:
a configuration item for model selection rules for selecting an online machine learning model from the trained machine learning models, and
a configuration item for application resources.

35. An apparatus comprising at least one computing device and at least one storage device, wherein the at least one storage device is configured to store instructions,
wherein the instructions are configured, upon being executed by the at least one computing device, to cause the at least one computing device to execute the following steps regarding execution of an automated machine learning process:
providing a model training operator and a model prediction operator that are mutually independent;
training a machine learning model on the basis of training data using the model training operator; and
providing a prediction service on prediction data using the model prediction operator and the trained machine learning model.

36. The apparatus of claim 35, wherein the instructions are configured, upon being executed by the at least one computing device, to cause the at least one computing device to execute the following steps regarding execution of an automated machine learning process:
providing an editing interface according to operation of editing the model training operator;
acquiring operator content input through the editing interface, wherein the operator content includes an operation command of data preprocessing on input training data, an operation command of feature engineering on the training data that has undergone data preprocessing, and an operation command of model training according to the results of feature engineering; and
encapsulating the operator content to obtain the model training operator.

37. The apparatus of claim 35 or 36, wherein said training a machine learning model on the basis of training data using the model training operator comprises:
providing a configuration interface for configuring model training in response to triggering operation on the model training operator;
obtaining training samples by data preprocessing and feature engineering processing on the training data according to configuration information input through the configuration interface; and
training a machine learning model on the basis of the training samples using at least one model training algorithm.

38. The apparatus of claim 37, wherein the configuration interface includes at least one of the following configuration items:
input source configuration item of a machine learning model;
applicable problem type configuration item of a machine learning model;
algorithm mode configuration item for training a machine learning model;
optimization objective configuration item of a machine learning model; and
field name configuration item of a prediction objective field of a machine learning model.

39. The apparatus of claim 37, wherein the data preprocessing on the training data comprises at least one of the following items:
Item 1, performing data type conversion of the training data;
Item 2, sampling the training data;
Item 3, annotating the training data as labeled data and unlabeled data;
Item 4, automatically identifying a data field type of the training data;
Item 5, filling in missing values of the training data;
Item 6, analyzing an initial time field of the training data, obtaining and adding a new time field, and deleting the initial time field;
Item 7, automatically identifying non-numerical data in the training data, and hashing the non-numerical data.

40. The apparatus of claim 37, wherein said obtaining training samples by data preprocessing and feature engineering processing on the training data comprises:
sampling the training data that has undergone data preprocessing;
performing feature pre-selection on the training data that has undergone the sampling, to obtain basic features;
performing feature derivation on the basic features to obtain derived features; and
generating training samples according to the basic features and the derived features.

41. The apparatus of claim 40, wherein said performing feature pre-selection on the training data that has undergone the sampling to obtain basic features comprises:
extracting all attribute information included in the training data that has undergone the sampling, wherein the attribute information is used to form features;
acquiring feature importance values of each attribute information; and
obtaining the basic features according to the feature importance values.

42. The apparatus of claim 41, wherein said obtaining the basic features according to the feature importance values comprises:
ranking all the feature importance values to obtain a ranking result; and
acquiring a first predetermined quantity of attribute information as the basic features according to the ranking result.

43. The apparatus of claim 40, wherein said performing feature derivation on the basic features to obtain derived features comprises:
performing at least one of statistical calculation and feature combination on the basic features to obtain the derived features, using preset feature generation rules.

44. The apparatus of claim 40, wherein the instructions are configured, upon being executed by the at least one computing device, to cause the at least one computing device to execute the following steps regarding execution of an automated machine learning process:
performing feature post-selection on the basic features and the derived features; and
generating training samples according to features obtained through the feature post-selection.

45. The apparatus of claim 44, wherein said performing feature post-selection on the basic features and the derived features comprises:
acquiring feature importance values of each basic feature and each derived feature,
ranking all the feature importance values to obtain a ranking result; and
acquiring a second predetermined quantity of features as required features for generating training samples, according to the ranking result.

46. The apparatus of any one of claims 35 to 45, wherein the instructions are configured, upon being executed by the at least one computing device, to cause the at least one computing device to execute the following steps regarding execution of an automated machine learning process:
obtaining a model training scheme on the basis of the trained machine learning model; and
visualizing the model training scheme;
wherein the model training scheme includes any one or more of: an algorithm used to train the machine learning model, hyperparameters of the machine learning model, effects of the machine learning model, and feature information;
wherein the feature information includes any one or more of feature quantity, feature generation method and feature importance analysis results.

47. The apparatus of claim 46, wherein the instructions are configured, upon being executed by the at least one computing device, to cause the at least one computing device to execute the following steps regarding execution of an automated machine learning process:
retraining the machine learning model according to the preview results of the visualization.

48. The apparatus of any one of claims 35 to 47, wherein said providing a prediction service on prediction data using the model prediction operator and the trained machine learning mode comprises:
providing a configuration interface for configuring the batch prediction service in response to the triggering operation of the model prediction operator;
obtain training samples by data preprocessing and feature-update processing on the training data according to configuration information input through the configuration interface; and
providing prediction results for the prediction samples using the trained machine learning model.

49. The apparatus of claim 48, wherein the configuration interface comprises at least one of:
a configuration item of field selection in a prediction result, and
a configuration item of switching state of a simulated real-time prediction service.

50. The apparatus of claim 48, wherein the instructions are configured, upon being executed by the at least one computing device, to cause the at least one computing device to execute the following steps regarding execution of an automated machine learning process:
providing a configuration interface for configuring a real-time prediction service according to an operation of configuring a real-time prediction service;
receiving a prediction service request including the prediction data through the API address provided in the configuration interface; and
obtaining a prediction result on the prediction data in response to the received prediction service request using the selected machine learning model, and sending the prediction result through the API address.

51. The apparatus of claim 50, wherein the configuration interface comprises at least one of:
a configuration item for model selection rules for selecting an online machine learning model from the trained machine learning models, and
a configuration item for application resources.

52. A computer-readable storage medium having a computer program stored thereon, which computer program, when executed by a processor, implements the method of any one of claims 1 to 17.
